# EUROPÄISCHE PATENTSCHRIFT

(11) **EP 2 724 914 B1**
(45) Veröffentlichungstag und Bekanntmachung des Hinweises auf die Patenterteilung: **06.07.2016**
(21) Anmeldenummer: 13189934.6
(22) Anmeldetag: 23.10.2013
(51) Int. Cl.: B62B 5/08, B62B 7/12, B62B 9/10, B62B 3/02

(54) **Vorrichtung zum Befördern von Gütern und/oder einer Person**
Device for transporting goods and/or a person
Dispositif de transport de biens et/ou d'une personne

(30) Priorität: 24.10.2012 DE 202012104097 U
(43) Veröffentlichungstag der Anmeldung: 30.04.2014
(73) Patentinhaber: Ponticelli, Pius, 4616 Kappel (CH)
(72) Erfinder: Ponticelli, Pius, 4616 Kappel (CH)
(74) Vertreter: Patentanwälte und Rechtsanwalt Weiß, Arat & Partner mbB

(56) Entgegenhaltungen:
- DE-U1-202011 106 382
- DE-U1-202012 102 518
- US-A- 5 451 072

## Beschreibung

Die vorliegende Erfindung betrifft eine Vorrichtung gemäss dem Oberbegriff des Anspruchs 1.

### STAND DER TECHNIK

Aus dem Stand der Technik sind verschiedene Arten von Vorrichtungen zum Befördern von Gütern bekannt und gebräuchlich. Beispielsweise zeigt die DE 20 2011 051 444 eine Vorrichtung zum Befördern von Gütern. Bedarfsweise ist vorgesehen, an diese Vorrichtung ein Rolltrittbrett anzubringen. Somit eignet sich die Vorrichtung dazu, neben den Gütern auch eine Person, insbesondere ein Kind, zu transportieren.

Ausserdem wird auf die DE 20 2011 106 382 U1 verwiesen, welche einen Trolley für Gepäck und Kind veröffentlicht, wobei eine Stehfläche von einer Hauptstange abklappbar ist und mittels eine Diagonalstange fixiert werden kann. Weiter wird auf die DE 20 2012 102 518 U1 verwiesen, welche eine Vorrichtung zum Fortbewegen einer Person und Gütern offenbart, wobei ein erstes Tragelement und ein zweites Tragelement über eine gemeinsame Haltekonstruktion zueinander schwenkbar angeordnet sind.
Ausserdem offenbart die US 5,451,072 einen Golfwagen mit einer Ver- und Entriegelungskonstruktion für das Anklappen der Golfwagenräder.

In diesem Zusammenhang wird auf die DE 198 56 875 A1 hingewiesen. Dort ist ein Handwagen, bestehend aus einem Gestänge, zwei Rädern oder Rollen und einem textilen Volumen beschrieben, welcher entweder vor oder hinter dem Benutzer geführt wird. Besonders hieran ist, dass das Gestänge aus zwei im Wesentlichen geradförmigen Elementen besteht, welche im Griffbereich beweglich miteinander verbunden sind. Im unteren Bereich - also in der Nähe der Rollen - sind die Elemente durch eine Traverse auf Abstand gehalten. Diese Traverse kann weggenommen oder in sich gefaltet oder auf einer Seite längs des Elementes verschoben werden. Durch eine gleichwirkende Eigenschaft wird ferner das Zusammenlegen der Elemente ermöglicht. Hierbei sind die Räder oder Rollen im unteren Bereich der Elemente oder an der Traverse angebracht und mit einer Abstell- oder Blockiervorrichtung versehen sind. Beim Aufstellen des Handwagens soll somit ein Wegrollen verhindert werden.

Ferner sind aus dem Stand der Technik auch verschiedene Arten von Vorrichtungen zum Fortbewegen von Personen bekannt. In diesem Zusammenhang sei beispielsweise auf die DE 20 2010 008 211 U1 verwiesen. Dort ist ein fahrbares Kinderspielzeug, insbesondere ein Zweirad oder ein Dreirad, beschrieben. Es weist einen abnehmbaren Sitz auf und ist dadurch gekennzeichnet, dass der Sitz über eine Halteeinrichtung verfügt, welche ausgebildet ist, um den vom Kinderspielzeug abgenommenen Sitz an einer Tischplatte zu befestigen ist. Aus der DE 20 2011 051 437 U1 wiederum ist eine Vorrichtung zur Fortbewegung einer Person gezeigt, wobei die Vorrichtung zusammenlegbar konstruiert ist.

Nachteilig an den dem Stand der Technik entsprechenden Vorrichtungen ist, dass sie aufwändig konstruiert und oft unflexibel sind. Ferner ist der Transport einer Person oft aufwändig.

### AUFGABE

Aufgabe der Erfindung ist es, eine Vorrichtung bereitzustellen, die kostengünstig hergestellt werden kann, dem Benutzer eine grosse Flexibilität ermöglicht und keine Massnahmen benötigt, wenn neben den zu befördernden Gütern auch eine Person befördert werden soll.

### LÖSUNG DER AUFGABE

Zur Lösung der Aufgabe führen die Merkmale des Anspruchs 1.

Eine erfindungsgemässe Vorrichtung erlaubt das Transportieren von Gütern, insbesondere von Einkaufswaren. Gleichzeitig eignet sie sich zum Transport von Personen. Einem Alter und einer Grösse bzw. einem Gewicht von zu transportierenden Personen sind hierbei nur insofern Grenzen gesetzt, als die Konstruktion der Vorrichtung eine ausreichende Stabilität aufweist. Es ist denkbar, die Vorrichtung stabiler auszuführen, beispielsweise durch widerstandsfähigere Materialien oder stabilere Verbindungen der einzelnen Teile der Vorrichtung untereinander, wenn vorrangig grössere und/oder schwerere Personen befördert werden sollen. Auf der anderen Seite kann die erfindungsgemässe Vorrichtung bezüglich Materialauswahl und Bauart auch auf kleinere und/oder leichtere Personen ausgelegt werden. Insbesondere richtet sich die Vorrichtung dann an die Beförderung von Kindern. Sie kann in diesem Fall auch kostengünstiger gebaut werden, da weniger widerstandsfähige Materialien und weniger stabile Verbindungen benötigt werden, wodurch Produktionskosten eingespart werden können.

Die erfindungsgemäße Vorrichtung weist einen Transportbehälter, insbesondere eine Tasche, und zumindest zwei Rollenelemente auf. Es ist daran gedacht, verschiedene Transportbehälter vorzusehen, ohne den von der Erfindung geschützten Bereich zu verlassen. So kann beispielsweise auch an einen Transportbehälter bzw. eine Transporteinrichtung für Getränkeflaschen oder Getränkekisten gedacht sein.

In einem bevorzugten Ausführungsbeispiel ist das Trittbrett zwischen zwei Rollenelementen angebracht und ein drittes Rollenelement dient als Führungsrad, wobei das dritte Rollenelement an dem anderen Rahmenteil befestigt ist.

Die zumindest zwei Rollenelemente sind bevorzugterweise paarweise über Achsen miteinander verbunden. Die zumindest zwei Rollenelemente sind weiterhin jeweils paarweise an einem Rahmenteil befestigt. Eines der Rahmenteile dient hierbei auch der Befestigung der Tasche. In einer bevorzugten Ausführungsform verfügt die Vorrichtung über zwei miteinander verbundene Rahmenteile.

Die Vorrichtung weist unmittelbar oberhalb einer Achse, mittels welcher die Rollenelemente am ersten Rahmenteil befestigt sind, ein Trittbrett auf. Eine zu befördernde Person kann auf einfache Weise auf dieses Trittbrett steigen und sich an separaten Griffen, welche am ersten Rahmenteil befestigt sind, während des Transports festhalten. Die zu befördernde Person steht hierbei direkt oberhalb der Achse, also nahe am Boden, wodurch der Transport und auch ein Auf- oder Absteigen sicher ist.

Ferner ist auch denkbar, auf die Griffe für die zu befördernde Person zu verzichten. In diesem Fall kann sich die zu befördernde Person an einem der Rahmenteile der Vorrichtung festhalten.

Weiterhin kann an Ausführungsformen der erfindungsgemässen Vorrichtung gedacht sein, bei denen das Trittbrett jeweils an verschiedenen Stellen der Vorrichtung befestigt ist. So ist es beispielsweise möglich, das Trittbrett über der Achse anzubringen, indem dem Trittbrett eine Einrichtung, beispielsweise eine Hülse oder dergleichen, angeformt ist. Alternativ kann das Trittbrett unmittelbar über, jedoch nicht an der Achse, sondern beispielsweise am ersten Rahmenteil der Vorrichtung, befestigt sein.

Im Falle der Befestigung des Trittbretts mit einer entsprechenden Einrichtung, beispielsweise einer Hülse, auf bzw. an der Achse, kann daran gedacht sein, die Befestigung flexibel zu gestalten. Es soll also beispielsweise möglich sein, eine Bewegung des Trittbretts, insbesondere um die Achse, zuzulassen. Diese Bewegung um die Achse ist bevorzugterweise begrenzt, so dass an Stelle einer starren Befestigung eine solche mit Spiel vorliegt.

Es kann daran gedacht sein, eines oder beide Rahmenteile oder Rahmenabschnitte teleskopierbar auszugestalten. Auch an teleskopierbar gestaltete Griffe kann gedacht sein.

Ein zumindest einem Paar der Rollenelemente jeweils zugeordnetes Drehelement ermöglicht eine einfache Handhabe der Vorrichtung durch einen Benutzer, da somit eine Richtungsänderung während der Fahrt auf einfache Weise ermöglicht wird.

Weiterhin kann daran gedacht sein, die Rahmenteile der Vorrichtung so auszugestalten, dass das zweite Rahmenteil auf dem ersten Rahmenteil verschieblich gelagert ist. Hierbei können verschiedenste bekannte Rast- oder Feststelleinrichtungen integriert werden, um die Position der Rahmenteile relativ zueinander festzulegen. Es kann auch an eine Führungseinrichtung gedacht sein, die mit beiden Rahmenteilen in Wirkverbindung steht. Eine Wirkverbindung umfasst hierbei eine drehbare Verbindung.

Die Flexibilität der Vorrichtung wird in bevorzugten Ausführungsbeispielen ausserdem dadurch erhöht, dass die Rahmenteile gegeneinander verschwenkbar sind. Vorzugsweise verfügt die Vorrichtung hierzu über ein Gelenk zwischen beiden Rahmenteile. Somit ist ein platzsparendes Verstauen gewährleistet. Es kann hierbei daran gedacht sein, eine oder mehrere Rast- oder Feststelleinrichtungen vorzusehen, die eine Festlegung der mittels des Gelenks verstellbaren Position der Rahmenteile zueinander ermöglicht.

Obgleich dies nicht der primäre Verwendungszweck der Vorrichtung ist, sei darauf hingewiesen, dass es problemlos möglich ist, nur eine Person ohne Güter zu transportieren.

Besonders vorteilhaft ist weiterhin, dass die Vorrichtung den Benutzer beim Bewegen nicht stört, da er nicht mit den Beinen oder den Füssen an sie stösst.

Weiterhin vorteilhaft ist es, dass Kinder, während die Vorrichtung bewegt wird, auf einfache Weise auf- und absteigen bzw. springen können. Somit kommt die Vorrichtung einem Spass- und Spieltrieb der Kinder entgegen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Seitenansicht einer ersten Ausführungsform einer erfindungsgemässen Vorrichtung;
Figur 2 eine Seitenansicht einer zweiten Ausführungsform einer erfindungsgemässen Vorrichtung.

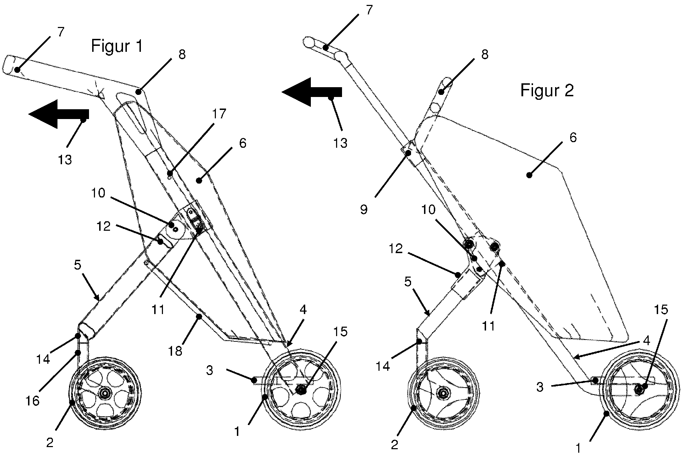

In Figur 1 ist eine Vorrichtung zum Befördern von Gütern und optional Personen dargestellt. Die Vorrichtung besteht aus zwei miteinander verbundenen Rahmenteilen 4, 5, welche endseitig jeweils Rollenelemente 1, 2 tragen. Die Verbindung beider Rahmenteile 4, 5 wird durch eine erste Verbindungseinrichtung 11 gewährleistet. Der Verbindungseinrichtung 11 ist eine Rast- und Feststelleinrichtung 17 zugeordnet. Diese Verbindungseinrichtung 11 ist auf dem ersten Rahmenteil 4 verschiebbar. Die Verbindung mit dem zweiten Rahmenteil 5 erfolgt über ein mit der Verbindungseinrichtung 11 in Verbindung stehendes Gelenk 10 sowie eine zweite Verbindungseinrichtung 12. Eine Führungseinrichtung 18 ist mit beiden Rahmenteilen 4, 5 verbunden.

Über einer die Rollenelemente 1 tragende Achse 15 ist dem ersten Rahmenteil 4 eine Trittfläche 3 angeformt. Andernends ist dem ersten Rahmenteil 4 ein Griff 7 angeformt. In einem Abstand zu diesem ersten Griff 7 weist das erste Rahmenteil 4 einen zweiten Griff 8 auf. Die Tasche 6 ist an beiden Rahmenteilen 4, 5 befestigt. Das zweite Rahmenteil 5 ist über ein Drehgelenk 14 mit einem Rahmenabschnitt 16 verbunden, an dessen Ende das Rollenelement 2 befestigt ist.

In Figur 2 ist eine im Vergleich zu der in Figur 1 dargestellten Vorrichtung leicht veränderte Ausführungsform der erfindungsgemässen Vorrichtung dargestellt. Zum einen ist der zweite Hebel 8 über eine ihm angeformte Hülse 9 mit dem ersten Rahmenteil 4 verbunden. Zum anderen ist die Verbindungseinrichtung 11 nicht verschiebbar auf dem ersten Rahmenteil 4 gelagert. Ferner ist die Tasche 6 nur am ersten Rahmenteil 4 befestigt. Das Trittbrett 3 ist, wie in der in Figur 1 dargestellten Ausführungsform gezeigt, unmittelbar oberhalb der Achse 15 befestigt. Jedoch liegt das Trittbrett 3 in dem in Figur 2 dargestellten Ausführungsbeispiel auch dem ersten Rahmenteil 4 auf.

Weiterhin ist in Figur 2 der Griff 7 teleskopierbar im ersten Rahmenteil gelagert.

Bezugnehmend auf die Figuren 1 - 2 erklärt sich die Funktionsweise der erfindungsgemässen Vorrichtung folgendermassen:
Ein Benutzer bewegt bzw. zieht die Vorrichtung in Bewegungsrichtung 13. Zweckmässigerweise nutzt er hierzu den Griff 7. In der Tasche 6 können Güter, wie z.B. Einkäufe, verstaut werden. Eine Person, vorzugsweise ein Kind, kann sich auf das Trittbrett 3 stellen und sich am Griff 8 festhalten. Somit wird auf einfache Weise der Transport von Gütern und/oder Personen bewerkstelligt. Da die Vorrichtung ein Drehgelenk aufweist 14, über welches das in Fahrtrichtung vordere Rollenelement 2 befestigt ist, kann der Benutzer die Vorrichtung auf einfache Weise lenken.

Die Führungseinrichtung 18 dient dazu, die Vorrichtung bei einem Gleiten der ersten Verbindungseinrichtung 11 auf dem ersten Rahmenteil 4 zu führen. Ferner ist eine Rast- oder Feststelleinrichtung 17 vorgesehen, welche der Arretierung der Verbindungseinrichtung 11 auf dem ersten Rahmenteil 4 dient.

**Bezugszeichenliste**

| | | | | | |
|---|---|---|---|---|---|
| 1 | Erstes Rollenelement | 34 | | 67 | |
| 2 | Zweites Rollenelement | 35 | | 68 | |
| 3 | Trittbrett | 36 | | 69 | |
| 4 | Erstes Rahmenteil | 37 | | 70 | |
| 5 | Zweites Rahmenteil | 38 | | 71 | |
| 6 | Tasche | 39 | | 72 | |
| 7 | Erster Griff | 40 | | 73 | |
| 8 | Zweiter Griff | 41 | | 74 | |
| 9 | Hülse | 42 | | 75 | |
| 10 | Gelenk | 43 | | 76 | |
| 11 | Erste Verbindungseinrichtung | 44 | | 77 | |
| 12 | Zweite Verbindungseinrichtung | 45 | | 78 | |
| 13 | Bewegungsrichtung | 46 | | 79 | |
| 14 | Drehgelenk | 47 | | | |
| 15 | Achse | 48 | | | |
| 16 | Rahmenabschnitt | 49 | | | |
| 17 | Rast- oder Feststelleinrichtung | 50 | | | |
| 18 | Führungseinrichtung | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Befördern von Gütern und/oder einer Person, mit einem ersten Rahmenteil (4) und einem zweiten Rahmenteil (5); wobei die Rahmenteile (4, 5) über Rollenelemente (1, 2) verfügen und die Rahmenteile (4, 5) relativ zueinander bewegbar sind und ein Führungsgriff (7) vorgesehen ist und ein Trittbrett (3) zur Beförderung der Person vorgesehen ist, wobei ein Haltegriff (8) vorgesehen ist, geeignet, um der beförderten Person ein Festhalten während des Transports zu ermöglichen; wobei ein Transportbehälter (6) vorgesehen ist, geeignet, um Waren zu transportieren.
**dadurch gekennzeichnet, dass**
die beiden Rahmenteile (4, 5) durch eine erste Verbindungseinrichtung (11) verbunden ist, wobei der Verbindungseinrichtung (11) eine Rast- und Feststelleinrichtung (17) zugeordnet ist, wobei die Verbindungseinrichtung (11) auf dem ersten Rahmenteil (4) verschiebbar ist, wobei zumindest eines der Rahmenteile (4, 5) teleskopartig ausziehbar ist, wobei die Rahmenteile (4, 5) gegeneinander verschiebbar und/oder gegeneinander schwenkbar sind, wobei die Verbindungseinrichtung (11) zur schwenkbaren Verbindung beider Rahmenteile (4, 5) ein Gelenk (10) umfasst die Verbindungseinrichtung (11) zur schwenkbaren Verbindung beider Rahmenteile (4, 5) ein Gelenk (10) umfasst, wobei das Trittbrett (3) unmittelbar oberhalb einer Achse (15) angebracht ist, wobei die Achse (15) dem ersten Rahmenteil (4) angeformt ist, wobei der Transportbehälter (6) nur am ersten Rahmenteil (4) befestigt ist.

2. Vorrichtung nach Anspruch 1, **dadurch gekennzeichnet, dass** das zweite Rahmenteil (5) andernends einer Verbindungseinrichtung (11) ein Rollenelement (2) umfasst, welches über ein Drehgelenk (14) mit dem zweiten Rahmenteil (5) verbunden ist.

3. Vorrichtung nach zumindest einem der vorhergehenden Ansprüche, **dadurch gekennzeichnet, dass** das erste Rahmenteil (4) eine Rast- oder Feststelleinrichtung (17) zur Festlegung oder Freigabe einer in dem ersten Rahmenteil (4) eingebrachten Teleskopstange

4. Vorrichtung nach zumindest einem der vorhergehenden Ansprüche, **dadurch gekennzeichnet, dass** das Trittbrett (3) waagerecht zu einem Untergrund angeordnet ist.

5. Vorrichtung nach einem der Ansprüche 1 bis 4, **gekennzeichnet durch** eine Führungseinrichtung (18), welche mit dem ersten Rahmenteil (4) ortsfest verbunden ist und mit dem zweiten Rahmenteil (5) in Wirkverbindung steht.

6. Verwendung einer Vorrichtung nach den Ansprüchen 1 bis 5 zum Transportieren von Tieren.

## Claims

1. Apparatus for transporting goods and/or a person, comprising a first frame part (4) and a second frame part (5), the frame parts (4, 5) being provided with roller elements (1, 2) and the frame parts (4, 5) being movable relative to one another and a guide handle (7) being provided and a footboard (3) being provided for transporting the person, a handhold (8) being provided that is suitable for allowing the transported person to hold on during the transportation, a transport container (6) being provided that is suitable for transporting goods,
**characterised in that**
the two frame parts (4, 5) are connected by a first connection device (11), the connection device (11) being associated with a catching and fixing device (17), the connection device (11) being slidable on the first frame part (4), at least one of the frame parts (4, 5) being telescopically extendable, the frame parts (4, 5) being slidable and/or pivotable relative to one another, the connection device (11) comprising a joint (10) for pivotally connecting the two frame parts (4, 5), the footboard (3) being attached immediately above a shaft (15), the shaft (15) being integrally formed on the first frame part (4), the transport container (6) being fastened only to the first frame part (4).

2. Apparatus according to claim 1, **characterised in that** the second frame part (5) comprises a roller element (2) at the other end from a connection device (11), which roller element is connected to the second frame part (5) by means of a revolute joint (14).

3. Apparatus according to at least one of the preceding claims, **characterised in that** the first frame part (4) comprises a catching or fixing device (17) for fixing or releasing a telescopic rod inserted in the first frame part (4).

4. Apparatus according to at least one of the preceding claims, **characterised in that** the footboard (3) is arranged horizontally with respect to a substrate.

5. Apparatus according to any of claims 1 to 4, **characterised by** a guide device (18) that is connected in a stationary manner to the first frame part (4) and is operatively connected to the second frame part (5).

6. Use of an apparatus according to claims 1 to 5 for transporting animals.

## Revendications

1. Dispositif pour le transport de biens et/ou d'une personne, avec une première partie de châssis (4) et une deuxième partie de châssis (5); les parties de châssis (4, 5) disposant d'éléments de rouleaux (1, 2) et les parties de châssis (4, 5) étant mobiles l'une par rapport à l'autre, et une poignée de guidage (7) étant prévue, et un marchepied (3) étant prévu pour le transport d'une personne, une poignée de maintien (8) étant prévue, convenant pour permettre à la personne transportée de se tenir pendant le transport; un conteneur de transport (6) étant prévu, convenant pour transporter des marchandises,
**caractérisé par le fait que**
les deux parties de châssis (4, 5) sont connectées par un premier moyen de connexion (11), au moyen de connexion (11) étant associé un moyen d'encliquetage et de d'immobilisation (17), le moyen de connexion (11) étant déplaçable sur la première partie de châssis (4), au moins l'une des parties de châssis (4, 5) étant extensible de manière télescopique, les parties de châssis (4, 5) étant déplaçables l'une par rapport à l'autre et/ou pivotables l'une par rapport à l'autre, le moyen de connexion (11) comportant, pour la connexion pivotable des deux parties de châssis (4, 5), une articulation (10), le marchepied (3) étant placé directement au-dessus d'un axe (15), l'axe (15) étant moulé sur la première partie de châssis (4), le conteneur de transport (6) étant fixé uniquement à la première partie de châssis (4).

2. Dispositif selon la revendication 1, **caractérisé par le fait que** la deuxième partie de châssis (5) comporte, à l'autre extrémité d'un moyen de connexion (11), un élément de rouleau (2) qui est connecté par l'intermédiaire d'une articulation rotative (14) à la deuxième partie de châssis (5).

3. Dispositif selon au moins l'une des revendications précédentes, **caractérisé par le fait que** la première partie de châssis (4) comporte un moyen d'encliquetage et de d'immobilisation (17) pour fixer ou dégager une barre télescopique introduite dans la première partie de châssis (4).

4. Dispositif selon au moins l'une des revendications précédentes, **caractérisé par le fait que** le marchepied (3) est disposé horizontalement par rapport à un fond.

5. Dispositif selon l'une des revendications 1 à 4, **caractérisé par** un moyen de guidage (18) qui est connecté de manière stationnaire à la première partie de châssis (4) et est en liaison active avec la deuxième partie de châssis (5).

6. Utilisation d'un dispositif selon les revendications 1 à 5 pour le transport d'animaux.
